# FASCICULE DE BREVET EUROPEEN

(11) **EP 3 903 158 B1**
(45) Date de publication et mention de la délivrance du brevet: **07.06.2023**
(21) Numéro de dépôt: 19850732.9
(22) Date de dépôt: 24.12.2019
(51) Int. Cl.: G05D 1/00, G01C 21/00, G01C 21/28

(54) **PROCÉDÉ ET SYSTÈME D'ASSISTANCE D'UN VÉHICULE AUTOMOBILE AUTONOME**
VERFAHREN UND SYSTEM ZUR UNTERSTÜTZUNG EINES AUTONOMEN KRAFTFAHRZEUGS
METHOD AND SYSTEM FOR ASSISTING AN AUTONOMOUS MOTOR VEHICLE

(30) Priorité: 28.12.2018 FR 1874384
(43) Date de publication de la demande: 03.11.2021
(73) Titulaire: Vulog, 06200 Nice (FR)
(72) Inventeur: COLON, François, 13013 MARSEILLE (FR)
(74) Mandataire: Roman, Alexis
(86) Numéro de dépôt international: PCT/FR2019/053294
(87) Numéro de publication internationale: WO 2020/136352

(56) Documents cités:
- WO-A1-2016/183525
- US-A1- 2017 308 082
- US-B1- 9 381 916

## Description

### Domaine technique.

L'invention concerne un procédé et un système d'assistance d'un véhicule automobile autonome.

Le domaine de l'invention concerne notamment les méthodes permettant de prendre momentanément le contrôle à distance d'un véhicule autonome, lorsqu'un événement critique apparaît sur l'itinéraire dudit véhicule.

### Etat de la technique.

Un véhicule automobile autonome (ex : voiture ou camion) est susceptible de circuler en toute autonomie sur un itinéraire, sans l'intervention d'un conducteur. Grâce à un dispositif de conduite automatique tel que celui décrit dans le document US 2017/308082 (ULRICH), le véhicule est capable de se déplacer seul et de prendre des décisions de pilotage dans des conditions de circulation réelles, sans intervention humaine. Ce dispositif de conduite est généralement connecté à un centre de commande distant, au travers d'un réseau de communication sans fil. Ce centre de commande permet de surveiller le fonctionnement du véhicule et d'interagir avec le dispositif de conduite le cas échéant.

Le dispositif de conduite automatique comprend de nombreux capteurs (lidar, radars, caméras, ...) et un logiciel de calcul basé sur des algorithmes d'intelligence artificielle, servant à modéliser en trois dimensions l'environnement du véhicule et à identifier les éléments qui le composent (marquage au sol, signalisation, bâtiments, véhicules, piétons...). Le dispositif de conduite peut ainsi décider d'actions de pilotage à réaliser sur ledit véhicule (direction, freinage, accélération, clignotants, ...) pour qu'il puisse se guider en respectant les règles de circulation et éviter les obstacles.

Avec les technologies existantes, la modélisation en trois dimensions de l'environnement du véhicule permet d'identifier des objets situés dans l'environnement immédiat, c'est-à-dire à quelques mètres, dudit véhicule. Le dispositif de conduite automatique peut ainsi détecter et résoudre des situations imprévues (par exemple un piéton qui traverse une rue en dehors d'un passage clouté), quelque secondes avant qu'un événement critique intervienne (par exemple une collision du véhicule avec le piéton). L'analyse et l'anticipation de ces imprévus étant quasi-instantanées, les possibilités d'actions de pilotage sont en pratique limitées (par exemple : changement brutal de direction ou freinage, d'urgence). En outre, cette analyse rapide peut entraîner des erreurs d'interprétation et donc des actions de pilotage non adaptées.

Un objectif de l'invention est de remédier aux inconvénients précités. Un autre objectif de l'invention est de proposer une méthode permettant d'assister efficacement un véhicule autonome lorsque survient un événement critique sur son itinéraire. Encore un autre objectif de l'invention est de proposer une méthode permettant de réduire les erreurs d'interprétation d'un événement critique et de mettre en oeuvre, le plus rapidement possible, des actions de pilotage pour surmonter de manière optimale cet événement.

### Présentation de l'invention.

La solution proposée par l'invention est un procédé d'assistance d'un véhicule automobile autonome comprenant les étapes suivante :
- utilisation d'un véhicule automobile autonome équipé d'un dispositif de conduite automatique adapté pour décider d'actions de pilotage à réaliser sur ledit véhicule afin de faire circuler de manière autonome ledit véhicule sur un itinéraire,
- connexion du dispositif de conduite automatique à un serveur informatique d'un centre de commande distant, laquelle connexion est réalisée au travers d'un réseau de communication sans fil,
- détermination, par le serveur informatique, de la position géographique du véhicule,
- le procédé comprend une étape de détection prédictive d'un événement critique sur l'itinéraire, en amont de la position géographique du véhicule, laquelle détection entraîne la prise en main du dispositif de conduite, par un opérateur du centre de commande, de sorte que ledit opérateur prenne temporellement le contrôle du véhicule à distance et décide des actions de pilotage,
- la détection prédictive de l'évènement critique résulte de l'analyse combinée de données, par le serveur informatique, lesquelles données comportent :
   -- des données sur l'état des voies de circulation empruntées sur l'itinéraire, en amont de la position géographique du véhicule, et
   -- des données sur les conditions de circulation sur l'itinéraire, en amont de la position géographique du véhicule, et
   -- des données sur les conditions météorologiques sur l'itinéraire, en amont de la position géographique du véhicule, et optionnellement
   -- des données provenant de capteurs installés sur le véhicule.

L'invention permet maintenant de prédire un événement critique qui interviendra sur l'itinéraire du véhicule autonome (accident, embouteillage, neige, verglas, ...). L'analyse de cet événement peut être faite bien en amont de l'endroit où il se produit, de sorte que les erreurs d'interprétation sont limitées et que des actions de pilotage adéquates vont pouvoir être mises en oeuvre. C'est en outre un opérateur humain qui prend momentanément le contrôle du véhicule à distance et qui effectue ces actions de pilotage, de façon à ce que l'évènement critique soit géré de manière optimale, avec un maximum de sécurité.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le procédé comporte les étapes suivantes : - affectation d'un niveau de risque à un événement détecté par le serveur informatique, le niveau de risque étant calculé en prenant comme données d'entrée : les données sur l'état des voies de circulation, les données sur les conditions de circulation, les données sur les conditions météorologiques, les données provenant des capteurs ; - détermination qu'un événement est critique si le niveau de risque qui lui est affecté dépasse un niveau seuil.
- Selon un mode de réalisation, le serveur affecte une valeur à chacune des données analysées pour la détection prédictive ; ces valeurs peuvent être pondérées pour que certaines desdites données aient un poids supérieur à d'autres.
- Selon un mode de réalisation, les données provenant de tout ou partie des capteurs installés sur le véhicule sont utilisées pour faire varier la pondération des valeurs affectées aux autres données.
- Selon un mode de réalisation, la connexion entre le dispositif de conduite automatique et le serveur informatique, est réalisée au travers d'un réseau de téléphonie mobile.
- Selon un mode de réalisation, le réseau de téléphonie mobile est un réseau 5G.
- Selon un mode de réalisation, les données sur l'état des voies de circulation sont récupérées par le serveur informatique : depuis une ou plusieurs bases de données d'un ou plusieurs sites de cartographie numérique et de calcul d'itinéraires sur internet, et/ou depuis des capteurs installés sur un ou plusieurs autres véhicules autonomes circulant sur des voies de circulation de l'itinéraire, en amont de la position géographique du véhicule.
- Selon un mode de réalisation, les données sur les conditions de circulation sont récupérées par le serveur informatique : depuis une ou plusieurs bases de données d'un ou plusieurs sites de cartographie numérique et de calcul d'itinéraires sur internet, et/ou depuis des capteurs installés sur un ou plusieurs autres véhicules autonomes circulant sur des voies de circulation de l'itinéraire, en amont de la position géographique du véhicule
- Selon un mode de réalisation, les données sur les conditions météorologiques sont récupérées par le serveur informatique : depuis une ou plusieurs bases de données d'un ou plusieurs sites de météorologie, et/ou depuis des capteurs de météorologie installés sur d'autres véhicules autonomes circulant sur des voies de circulation de l'itinéraire, en amont de la position géographique du véhicule.
- Selon un mode de réalisation, les données analysées par le serveur informatique concernent une portion de l'itinéraire qui est située en amont de la position géographique du véhicule, à une distance égale ou supérieure à 2 km de ladite position géographique.

Un autre aspect de l'invention concerne un système d'assistance d'un véhicule automobile autonome comportant :
- un véhicule automobile autonome équipé d'un dispositif de conduite automatique adapté pour décider d'actions de pilotage à réaliser sur ledit véhicule afin de faire circuler de manière autonome ledit véhicule sur un itinéraire,
- un centre de commande distant comportant un serveur informatique connecté au dispositif de conduite automatique, au travers d'un réseau de communication sans fil, lequel serveur comprend un moyen pour déterminer la position géographique du véhicule,
- le serveur informatique est adapté pour détecter, de manière prédictive, un événement critique sur l'itinéraire, en amont de la position géographique du véhicule, laquelle détection entraîne la génération d'une instruction de prise en main du dispositif de conduite, par un opérateur du centre de commande, de sorte que ledit opérateur puisse prendre temporellement le contrôle du véhicule à distance et décider des actions de pilotage,
- la détection prédictive de l'évènement critique résulte de l'analyse combinée de données, par un le serveur informatique, lesquelles données comportent :
   -- des données sur l'état des voies de circulation empruntées sur l'itinéraire, en amont de la position géographique du véhicule, et
   -- des données sur les conditions de circulation sur l'itinéraire, en amont de la position géographique du véhicule, et
   -- des données sur les conditions météorologiques sur l'itinéraire, en amont de la position géographique du véhicule, et
   -- des données provenant de capteurs installés sur le véhicule.

### Brève description des figures.

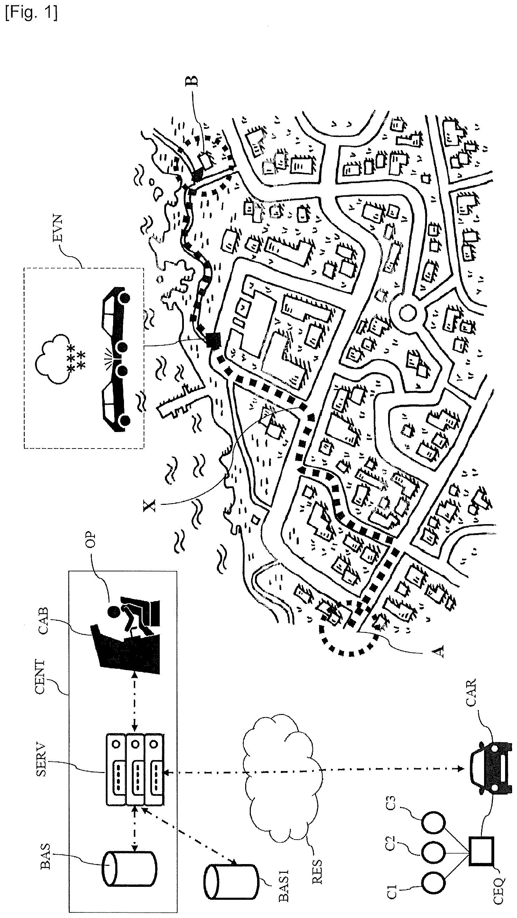

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels
[Fig. 1] illustre un exemple de réalisation d'un système pour la mise en oeuvre de l'invention.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en oeuvre une ou plusieurs applications informatiques exécutées par des équipements ou serveurs informatiques. Par souci de clarté, il faut comprendre au sens de l'invention que « *un équipement ou serveur fait quelque chose* » signifie « *l'application informatique exécutée par une unité de traitement de l'équipement ou du serveur fait quelque chose* ». Tout comme *« l'application informatique fait quelque chose* » signifie « *l'application informatique exécutée par l'unité de traitement de l'équipement ou du serveur fait quelque chose* ».

Encore par souci de clarté, la présente invention est susceptible de faire référence à un ou plusieurs « *processus informatiques logiques* ». Ces derniers correspondent aux actions ou résultats obtenus par l'exécution d'instructions de différentes applications informatiques. Aussi, il faut également comprendre au sens de l'invention que « *un processus informatique logique est adapté pour faire quelque chose* » signifie « *les instructions d'une application informatique exécutées par une unité de traitement font quelque chose* »*.*

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « *Serveur informatique* » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- « *Requête* » désigne un ordre d'exécution pouvant suivre un protocole de communication et comprenant des paramètres en entrée (question, informations, ...) et éventuellement des paramètres en retour (réponse, information, ...), pouvant se présenter dans un format lié au protocole employé.
- « *Unité de traitement* » peut être compris de façon non limitative comme : processeur, microprocesseurs, CPU (pour Central Processing Unit).
- « *Matériel informatique* » représente une ou plusieurs pièces détachées d'un équipement informatique et peut être compris de façon non limitative comme hardware.
- « *Application informatique* » peut être comprise comme : logiciel, programme informatique, software, etc.
- « *Réseau de communication* » peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- « *Véhicule automobile autonome* » est un véhicule automobile apte à rouler sur route, sans intervention d'un conducteur. Un véhicule autonome est généralement désigné par les termes anglais : self-driving car, robot car, autonomous car, ou driverless car. Le véhicule peut notamment être une voiture (moteur thermique et/ou électrique) ou un camion (moteur thermique et/ou électrique).
- « *Flotte* » ou « *parc* » peut être compris comme une pluralité de véhicules autonomes appartenant à une société, une agence publique, une coopérative, une association, un groupe d'individus, etc.
- L'utilisation des adjectifs « *amont* » et « *aval* » pour décrire la position d'un événement ou d'un objet, prend comme référence la direction d'avancement du véhicule autonome le long de l'itinéraire. Un événement ou un objet situé en amont de la position géographique d'un véhicule signifie que cet événement ou cet objet est localisé devant le véhicule, entre ledit véhicule et le point d'arrivé de l'itinéraire. De même, un véhicule situé en aval de la position géographique d'un événement ou d'un objet signifie que ce véhicule est localisé derrière cette position géographique, entre le point de départ de l'itinéraire et ladite position géographique.

Sur la figure 1, le système pour la mise en oeuvre du procédé objet de l'invention comprend un véhicule automobile autonome CAR et un centre de commande CENT qui est distant dudit véhicule. Le centre de commande CENT comporte un serveur informatique SERV. La zone géographique servant à exemplifier l'invention est ici une zone urbaine. L'itinéraire du véhicule CAR est illustré par la ligne en pointillé.

Le véhicule CAR, et de manière générale chaque véhicule autonome de la flotte, est équipé d'un dispositif de conduite automatique CEQ. Ce dispositif CEQ se présente sous la forme d'un ou plusieurs ordinateurs embarqués comprenant les ressources informatiques pour réaliser des fonctions du procédé de l'invention et notamment les décisions d'actions de pilotage à exécuter sur le véhicule CAR afin de faire circuler celui-ci de manière autonome sur l'itinéraire. En particulier, le dispositif de conduite CEQ commande les actionneurs du véhicule CAR assurant son mouvement (propulsion, freinage, direction) ainsi que le contrôle d'équipements auxiliaires (feux, clignotant, klaxon, etc.). Le dispositif CEQ comporte également une interface de communication, par exemple GSM, 3G, 4G, 5G, pour établir une liaison de communication sans fil avec le serveur SERV, au travers d'un réseau de communication RES.

Le dispositif de conduite CEQ est connecté à divers capteurs C1, C2, C3 aménagés sur le véhicules CAR. Ces capteurs C1, C2, C3 fournissent en temps réel des données permettant au dispositif de conduite CEQ d'avoir une modélisation informatique de l'environnement entourant le véhicule CAR et à identifier les éléments qui composent cet environnement. Ainsi, alors que le véhicule CAR suit un itinéraire, le dispositif de conduite CEQ peut continuellement ajuster les actions de pilotages en réponse aux données des capteurs C1, C2, C3. A titre d'exemple, ces capteurs C1, C2, C3 consistent en des caméras (avant, arrière, latérale, panoramique, ...), des capteurs de proximité, des capteurs tactiles, des capteurs de détection de mouvement, des capteurs de mesure de distance tels que des lidars (de l'anglais Laser Imaging Détection And Ranging), des radars, des sonars, des capteurs de vitesse, des capteurs météorologique (température, humidité, vents, pression atmosphérique, altitude, ...), des microphones extérieurs et/ou intérieur, etc.

Le véhicule CAR, et de manière générale chaque véhicule autonome de la flotte, est associé à un numéro d'identification unique. Le serveur SERV met régulièrement à jour, préférentiellement en temps réel, une base de données des véhicules de la flotte. Cette base de données BAS regroupe notamment : l'identifiant de chaque véhicule et leur position géographique. D'autres informations et/ou données peuvent être regroupées dans la base de données, le cas échéant, notamment leur statut (ex : disponible ou indisponible). La base de données BAS peut être enregistrée dans une zone mémoire du serveur SERV ou être distante dudit serveur (et distante du centre de commande CENT) et connectée à ce dernier.

La position géographique des véhicules peut être obtenue par satellite (système GPS ou Galileo) ou par un système de triangulation (par exemple, un système utilisant les cellules d'un réseau 4G ou 5G) ou par une combinaison des deux systèmes de localisation. Le dispositif de conduite CEQ comporte avantageusement un composant, par exemple un composant GPS, permettant d'obtenir une information de géo-localisation qui peut être récupérée par le serveur SERV. Le serveur SERV peut récupérer automatiquement cette information en interrogeant en temps réel ou a intervalles de temps réguliers (par exemple toutes les 5 minutes), le dispositif de conduite CEQ. Ce dernier peut également transmettre automatiquement cette information au serveur SERV (sans répondre à une requête d'interrogation), en temps réel ou a intervalles de temps réguliers (par exemple toutes les 5 minutes). Le serveur SERV peut ainsi déterminer de manière très précise la position géographique de chaque véhicule de la flotte et notamment celui du véhicule CAR.

Dans l'exemple de la figure 1, l'itinéraire du véhicule CAR consiste en un trajet entre un point de départ A et un point d'arrivé B. Le trajet est planifié par le dispositif de conduite CEQ et transmis au serveur SERV. Selon une alternative, le trajet est planifié par le serveur SERV et transmis au dispositif de conduite CEQ. Le dispositif de conduite CEQ (et/ou le serveur SERV) intègre avantageusement une ou plusieurs applications informatiques de cartographie numérique et de calcul d'itinéraires, de sorte qu'il a une connaissance exhaustive des rues, voies de circulation, cheminements piéton, situés entre le point A et le point B. De manière alternative, le dispositif de conduite CEQ (et/ou le serveur SERV) est adapté pour se connecter à un ou plusieurs sites de cartographie numérique et de calcul d'itinéraires sur internet pour récupérer ces informations.

Dans le cadre de la présente invention, le serveur SERV est adapté pour détecter de manière prédictive un événement critique EVN sur l'itinéraire, en amont de la position géographique du véhicule CAR. Dans l'exemple de la figure 1, le serveur SERV détecte qu'un accident de la circulation a eut lieu entre le point A et le point B et qu'il neige sur le lieu de l'accident. Cette détection est réalisée alors que le véhicule CAR se trouve à un point X de l'itinéraire, lequel point X est localisé en aval du lieu de l'accident, par exemple à 2 Km de la position géographique de l'accident. Par « détection prédictive », on entend que le serveur SERV détecte l'évènement avant que le dispositif de conduite CEQ puisse le détecter seul, au moyen des capteurs C1-C3.

La détection prédictive de l'évènement critique résulte de l'analyse combinée (c'est-à-dire une analyse simultanée et croisée) de données, par le serveur SERV. Ces données comportent :
-- des données sur l'état des voies de circulation empruntées sur l'itinéraire, en amont de la position géographique X du véhicule CAR, et
-- des données sur les conditions de circulation sur l'itinéraire, en amont de la position géographique X du véhicule CAR, et
-- des données sur les conditions météorologiques sur l'itinéraire, en amont de la position géographique X du véhicule CAR, et, éventuellement,
-- des données provenant de tout ou partie des capteurs C1-C3 installés sur le véhicule CAR.

Les données sur l'état des voies de circulation consistent en des données sur des événements temporaires qui affectent une ou plusieurs voies de circulation empruntées sur l'itinéraire. Il s'agit notamment de travaux, d'objets entravant une voie de circulation, de routes ou de tunnels fermés à la circulation, etc. Les données sur les conditions de circulation consistent en des données sur l'état du trafic (fluide, dense, très dense) sur une ou plusieurs voies de circulation empruntées sur l'itinéraire. Le serveur SERV est avantageusement adapté pour se connecter à une ou plusieurs bases de données BAS1 d'un ou plusieurs sites internet dédiés, notamment des sites de cartographie numérique et de calcul d'itinéraires sur internet (ex : https://fr.mappy.com, https://www.viamichelin.fr) pour récupérer les données sur l'état des voies de circulation et sur l'état du trafic. De manière alternative ou complémentaire, le serveur SERV interroge la base de donnée BAS pour localiser un ou plusieurs autres véhicules autonomes circulant sur des voies de circulation de l'itinéraire, en amont de la position géographique du véhicule CAR. Lorsque le serveur SERV a identifié ces véhicules, il interroge leur dispositif de conduite (c'est-à-dire qu'il génère et émet une requête d'interrogation) pour récupérer les données de leurs capteurs. Le serveur SERV peut ainsi analyser une modélisation informatique en trois dimensions de l'environnement entourant chacun de ces véhicules pour identifier des éléments pertinents susceptibles de caractériser un événement critique.

Les données sur les conditions météorologiques consistent notamment en une ou plusieurs des données suivantes : température, pression atmosphérique, altitude, vent, humidité, neige, verglas. Le serveur SERV est avantageusement adapté pour se connecter à une ou plusieurs bases de données BAS1 d'un ou plusieurs sites internet dédiés, notamment des sites de météorologie sur internet (ex : http://www.v-traffic.com/meteo-routiere, http://www.meteofrance.com) pour récupérer les données sur la météo routière. De manière alternative ou complémentaire, le serveur SERV interroge la base de donnée BAS pour localiser un ou plusieurs autres véhicules autonomes circulant sur des voies de circulation de l'itinéraire, en amont de la position géographique du véhicule CAR. Lorsque le serveur SERV a identifié ces véhicules, il interroge leur dispositif de conduite CEQ (c'est-à-dire qu'il génère et émet une requête d'interrogation) pour récupérer les données de leurs capteurs météorologiques. Le serveur SERV peut ainsi identifier des évènements météorologiques exceptionnels susceptibles de caractériser un événement critique.

Les données provenant de tout ou partie des capteurs C1-C3 peuvent être utilisées pour corréler certaines des données précédentes. Par exemple, si un site météorologie indique au serveur SERV une dégradation subite des conditions météorologiques sur une zone du trajet, le serveur SERV peut interroger les capteurs météorologiques du véhicule CAR pour confirmer cette information (par exemple en constatant une variation brutale de la pression atmosphérique).

Les données récupérées par le serveur SERV sont analysées en temps réel pour identifier un potentiel événement critique susceptible de compromettre la sécurité du véhicule CAR et de ses passagers. Le serveur SERV exécute avantageusement un algorithme pour affecter un niveau de risque à un événement. Cet algorithme est avantageusement basé sur un apprentissage automatique (intelligence artificielle) pour davantage d'efficience. Les données d'entrée de cet algorithme sont les données précitées et les données de sortie sont des scores ou niveaux de risques. Ces niveaux sont par exemple classés sur une échelle de 0 à 5 avec : 0 = pas de risque ; 1 = risque très faible ; 2 = risque faible ; 3 = risque modéré ; 4 = risque élevé ; 5 = risque très élevé. Selon un mode de réalisation, le serveur SERV affecte une valeur à chacune des données analysées : si aucun événement n'est signalé sur les voies de circulation, une valeur nulle est affectée aux données sur l'état des voies de circulation. Des travaux vont être affectés d'une certaine valeur non nulle, un objet entravant une voie de circulation va être affecté d'une autre valeur non nulle, une route ou de tunnel fermé à la circulation va être affecté encore d'une autre valeur non nulle, etc. Il en est de même pour les données sur les conditions de circulation : un trafic fluide va être affecté d'une valeur nulle, un trafic dense va être affecté d'une valeur non nulle, un trafic dense va être affecté d'une autre valeur non nulle supérieure, et un trafic très dense va être affecté d'encore une autre valeur non nulle supérieure. Des valeurs similaires sont affectées aux données sur les conditions météorologiques : température, pression atmosphérique, vent, humidité, neige, verglas. Les valeurs affectées à des chutes de neige ou à la présence de verglas vont être maximales car les plus dangereuses.

Selon un mode de réalisation, les valeurs affectées à toutes ces données sont pondérées pour que certaines aient un poids supérieur à d'autres. Par exemple, des chutes de neige ou à la présence de verglas ont un poids supérieur à la caractéristique du trafic dans la mesure où le dispositif de conduite CEQ sera plus à même de gérer seul des conditions de circulation que des événements météorologiques exceptionnels. Les données provenant de tout ou partie des capteurs C1-C3 peuvent être utilisées pour faire varier la pondération des valeurs affectées aux autres données. Par exemple, si des données provenant d'un site météorologique coïncident avec les données des capteurs météorologiques du véhicule CAR, une certaine pondération est appliquée. Dans le cas contraire, une autre pondération sera appliquée. De même, si le serveur SERV détecte la présence d'un incendie sur une portion de l'itinéraire, il pourra analyser les images transmises par les caméras du véhicule CAR pour déterminer l'intensité de cet incendie (un nuage de fumée épais et dense au loin du véhicule CAR montrera la présence d'un incendie de forte intensité). La pondération affectée aux données sur l'état des voies de circulation pourra alors variée selon que cet incendie est jugé de forte intensité ou de faible intensité par le serveur SERV. Le serveur SERV peut mettre en oeuvre d'autres algorithmes pour calculer un niveau de risque et déterminer si un événement est critique ou pas.

Dans le mode de réalisation précité, au delà d'un certain niveau seuil, le serveur SERV détermine qu'un événement est critique et ne peut pas être géré en toute sécurité par le dispositif de conduite CEQ seul. Et en deçà de ce niveau seuil, le serveur SERV détermine qu'un événement est non critique et peut être géré par le dispositif de conduite CEQ seul. Par exemple, le serveur SERV peut être programmé pour déterminer qu'à partir du niveau 4, un événement est considéré comme critique. Dans l'exemple de la figure 1, la seule détection de l'accident entre le point A et le point B aurait été affecté d'un niveau 2 ou 3. Le dispositif de conduite CEQ peut gérer seul cette situation lorsque le véhicule CAR arrive sur le lieu de cet accident. Par contre, la présence de chutes de neige sur le site de l'accident relève le niveau à 4 ou 5. En effet, la conduite sur neige nécessite une technique de pilotage particulière que le dispositif de conduite CEQ n'est pas en mesure de réaliser seul en toute sécurité. Le serveur SERV initie dans ce cas une action spécifique.

Selon l'invention, la détection d'un événement critique par le serveur SERV entraîne la prise en main du dispositif de conduite CEQ, par un opérateur du centre de commande, de sorte que ledit opérateur prenne temporellement le contrôle du véhicule CAR à distance et décide des actions de pilotage. Le centre de contrôle CENT est équipée d'une interface humaine simulant l'environnement du véhicule CAR grâce aux données des capteurs C1-C3 récupérées par le serveur SERV en temps réel. L'interface est configurée pour permettre une immersion totale d'un opérateur OP dans la peau d'un conducteur du véhicule CAR. Cet opérateur humain est ainsi capable de conduire de manière virtuelle le véhicule CAR.

Sur la figure 1, cette interface se présente sous la forme d'une cabine ou simulateur de pilotage CAB. Selon un mode avantageux de réalisation, cette cabine CAB dispose d'un ou plusieurs écrans reproduisant la vision à l'extérieur du véhicule CAR et éventuellement une vision à l'intérieur du véhicule. La cabine CAB dispose également d'un « ensemble matériel » permettant à l'opérateur OP d'interagir avec le véhicule simulé : tableau de bord, siège, volant directionnel, pédales (accélération, freinage, embrayage), boîte de vitesse, commandes (feux, clignotant, klaxon, ...). La cabine CAB peut également être pourvue d'une interface sonore capable de restituer les sons à l'intérieur et/ou à l'extérieur du véhicule CAR. Un micro peut également être prévu pour communiquer avec les passagers du véhicule CAR.

Lorsque le serveur SERV détecte un événement critique, il transmet au dispositif de conduite CEQ une instruction de prise en main. Cette instruction comprend des données modifiant le fonctionnement autonome du véhicule CAR. Ces données d'instruction permettent notamment d'empêcher momentanément le dispositif de conduite CEQ de décider des actions de pilotage. Toutes les instructions d'action de pilotage sont maintenant générées depuis la cabine CAB, et sont décidées par l'opérateur OP. Ce dernier prend ainsi le contrôle à distance du véhicule CAR. Le dispositif de conduite CEQ sert alors uniquement d'interface entre la cabine CAB et les actionneurs du véhicules CAR assurant son mouvement (propulsion, freinage, direction) ainsi que les équipements auxiliaires (feux, clignotant, klaxon, ...), etc. Ainsi, lorsque l'opérateur OP conduit le véhicule virtuel simulé par la cabine CAB, chaque action de pilotages est instantanément transmise au véhicule CAR. En reprenant l'exemple précité, l'opérateur OP, ayant des compétences pour une conduite sur neige, peut piloter le véhicule CAR à distance pour gérer le passage de la zone accidentée et enneigée.

L'opérateur OP doit pouvoir contrôler le véhicule CAR suffisamment tôt de manière à pouvoir anticiper au mieux les actions de pilotage et gérer le passage de l'évènement critique EVN en toute sécurité. En effet, si l'opérateur OP devait prendre le contrôle du véhicule CAR lorsque celui-ci est à proximité immédiate de l'évènement critique EVN, ses possibilités d'actions de pilotage seraient davantage limitées et susceptibles d'erreurs d'interprétation. Aussi, selon un mode de réalisation, les données analysées par le serveur SERV concernent une portion de l'itinéraire qui est située en amont de la position géographique du véhicule CAR, à une distance égale ou supérieure à 2 km de ladite position géographique. Sur la figure 1, le serveur SERV détecte l'évènement critique EVN alors que le véhicule CAR est localisé au point X, en aval de la position géographique de l'évènement critique EVN. La distance entre le point X et l'événement critique EVN est égale ou supérieure à 2 km, avantageusement supérieure ou égale à 5 km, de sorte que l'opérateur OP est tout le temps nécessaire pour se familiariser avec l'environnement du véhicule CAR reproduit dans la cabine CAB et anticiper au mieux les actions de pilotage.

Lorsque l'événement critique EVN est surmonté et laissé en aval du véhicule CAR, et que le serveur SERV ne détecte plus d'autre événement critique, ledit serveur transmet au dispositif de conduite CEQ d'autres données d'instruction modifiant le fonctionnement autonome du véhicule CAR. Ces autres données d'instruction autorisent à nouveau le dispositif de conduite CEQ de décider seul des actions de pilotage.

Il convient de s'assurer que toutes les instructions d'action de pilotage générées par l'opérateur OP, depuis la cabine CAB, puissent être transmissent instantanément ou quasi-instantanément au dispositif de conduite CEQ. En effet, une instruction de pilotage qui serait reçue avec un décalage temporel significatif par le dispositif de conduite CEQ, serait problématique. Aussi, un réseau de téléphonie mobile RES est préférentiellement choisi pour assurer la connexion entre le dispositif de conduite CEQ et le serveur SERV. Ce type de réseau a en effet une excellente couverture géographique (les risques de zones blanches étant fortement limités voire nuis) et ont des débits de communication suffisamment élevés pour transmettre rapidement les instructions d'action de pilotage au dispositif de conduite CEQ. On utilise avantageusement un réseau 5G qui assure un débit de communication optimal.

L'invention concerne également un produit programme d'ordinateur comportant des instructions pour la mise en oeuvre des différentes étapes du procédé de l'invention. Les étapes peuvent être réalisées par un programme d'ordinateur enregistré dans la mémoire du serveur SERV et dont les instructions sont exécutées par l'unité de traitement dudit serveur. Selon différents modes de réalisation, des étapes du procédé peuvent être réalisées par le dispositif de conduite CEQ du véhicule CAR.

L'agencement des différents éléments et/ou moyens et/ou étapes de l'invention, dans les modes de réalisation décrits ci-dessus, ne doit pas être compris comme exigeant un tel agencement dans toutes les implémentations. Notamment, une ou plusieurs caractéristiques exposées seulement dans un mode de réalisation peuvent être combinées avec une ou plusieurs autres caractéristiques exposées seulement dans un autre mode de réalisation.

## Revendications

1. Procédé d'assistance d'un véhicule automobile autonome comprenant les étapes suivante :
- utilisation d'un véhicule automobile autonome (CAR) équipé d'un dispositif de conduite automatique (CEQ) adapté pour décider d'actions de pilotage à réaliser sur ledit véhicule afin de faire circuler de manière autonome ledit véhicule sur un itinéraire,
- connexion du dispositif de conduite automatique (CEQ) à un serveur informatique (SERV) d'un centre de commande (CENT) distant, laquelle connexion est réalisée au travers d'un réseau de communication sans fil (RES),
- détermination, par le serveur informatique (SERV), de la position géographique du véhicule (CAR),
- détection prédictive d'un événement critique (EVN) sur l'itinéraire laquelle détection entraîne la prise en main du dispositif de conduite (CEQ), par un opérateur du centre de commande (NET), de sorte que ledit opérateur prenne temporellement le contrôle du véhicule (CAR) à distance et décide des actions de pilotage,
**caractérisé en ce que** :
- la détection prédictive de l'évènement critique (EVN) résulte de l'analyse combinée de données, par le serveur informatique (SERV), lesquelles données comportent :
-- des données sur l'état des voies de circulation empruntées sur l'itinéraire, en amont de la position géographique du véhicule (CAR), et
-- des données sur les conditions de circulation sur l'itinéraire, en amont de la position géographique du véhicule (CAR), et
-- des données sur les conditions météorologiques sur l'itinéraire, en amont de la position géographique du véhicule (CAR), et
-- des données provenant de capteurs (C1, C2, C3) installés sur le véhicule (CAR),
- la détection prédictive de l'évènement critique (EVN) est réalisée en amont de la position géographique du véhicule (CAR), avant que le dispositif de conduite (CEQ) détecte seul ledit événement au moyen des capteurs (C1, C2, C3),
et où un évènement critique (EVN) situé en amont de la position géographique du véhicule (CAR) signifie que cet événement est localisé devant ledit véhicule, entre ledit véhicule et un point d'arrivé de l'itinéraire.

2. Procédé selon la revendication 1, comportant les étapes suivantes :
- affectation d'un niveau de risque à un événement détecté par le serveur informatique (SERV), le niveau de risque étant calculé en prenant comme données d'entrée : les données sur l'état des voies de circulation, les données sur les conditions de circulation, les données sur les conditions météorologiques, les données provenant des capteurs (C1, C2, C3),
- détermination qu'un événement est critique si le niveau de risque qui lui est affecté dépasse un niveau seuil.

3. Procédé selon la revendication 2, comportant les étapes suivantes :
- affectation, par le serveur (SERV) d'une valeur à chacune des données d'entrée,
- pondération des valeurs affectées aux données d'entrée pour que certaines desdites données aient un poids supérieur à d'autres.

4. Procédé selon la revendication 3, dans lequel les données provenant de tout ou partie des capteurs (C1, C2, C3) installés sur le véhicule (CAR) sont utilisées pour faire varier la pondération des valeurs affectées aux autres données.

5. Procédé selon l'une des revendications précédentes, dans lequel la connexion entre le dispositif de conduite automatique (CEQ) et le serveur informatique (SERV), est réalisée au travers d'un réseau (RES) de téléphonie mobile.

6. Procédé selon la revendication 5, dans lequel le réseau (RES) de téléphonie mobile est un réseau 5G.

7. Procédé selon l'une des revendications précédentes, dans lequel les données sur l'état des voies de circulation sont récupérées par le serveur informatique (SERV) :
- depuis une ou plusieurs bases de données (BAS1) d'un ou plusieurs sites de cartographie numérique et de calcul d'itinéraires sur internet, et/ou
- depuis des capteurs installés sur un ou plusieurs autres véhicules autonomes circulant sur des voies de circulation de l'itinéraire, en amont de la position géographique du véhicule (CAR).

8. Procédé selon l'une des revendications précédentes, dans lequel les données sur les conditions de circulation sont récupérées par le serveur informatique (SERV) :
- depuis une ou plusieurs bases de données (BAS1) d'un ou plusieurs sites de cartographie numérique et de calcul d'itinéraires sur internet, et/ou
- depuis des capteurs installés sur un ou plusieurs autres véhicules autonomes circulant sur des voies de circulation de l'itinéraire, en amont de la position géographique du véhicule (CAR).

9. Procédé selon l'une des revendications précédentes, dans lequel les données sur les conditions météorologiques sont récupérées par le serveur informatique (SERV) :
- depuis une ou plusieurs bases de données (BAS1) d'un ou plusieurs sites de météorologie, et/ou
- depuis des capteurs de météorologie installés sur d'autres véhicules autonomes circulant sur des voies de circulation de l'itinéraire, en amont de la position géographique du véhicule (CAR).

10. Procédé selon l'une des revendications précédentes, dans lequel les données analysées par le serveur informatique (SERV) concernent une portion de l'itinéraire qui est située en amont de la position géographique du véhicule (CAR), à une distance égale ou supérieure à 2 km de ladite position géographique.

11. Système d'assistance d'un véhicule automobile autonome comportant :
- un véhicule automobile autonome (CAR) équipé d'un dispositif de conduite automatique (CEQ) adapté pour décider d'actions de pilotage à réaliser sur ledit véhicule afin de faire circuler de manière autonome ledit véhicule sur un itinéraire,
- un centre de commande (CENT) distant comportant un serveur informatique (SERV) connecté au dispositif de conduite automatique (CEQ), au travers d'un réseau de communication sans fil (RES), lequel serveur comprend un moyen pour déterminer la position géographique du véhicule (CAR),
et dans lequel :
- le serveur informatique (SERV) est adapté pour détecter, de manière prédictive, un événement critique (EVN) sur l'itinéraire, laquelle détection entraîne la génération d'une instruction de prise en main du dispositif de conduite (CEQ), par un opérateur (OP) du centre de commande (CENT), de sorte que ledit opérateur puisse prendre temporellement le contrôle du véhicule (CAR) à distance et décider des actions de pilotage,
**caractérisé en ce que** :
- la détection prédictive de l'évènement critique résulte de l'analyse combinée de données, par le serveur informatique (SERV), lesquelles données comportent :
-- des données sur l'état des voies de circulation empruntées sur l'itinéraire, en amont de la position géographique du véhicule (CAR), et
-- des données sur les conditions de circulation sur l'itinéraire, en amont de la position géographique du véhicule (CAR), et
-- des données sur les conditions météorologiques sur l'itinéraire, en amont de la position géographique du véhicule (CAR), et
-- des données provenant de capteurs (C1, C2, C3) installés sur le véhicule (CAR),
- le serveur informatique (SERV) est adapté pour réaliser la détection prédictive de l'évènement critique (EVN) en amont de la position géographique du véhicule (CAR), avant que le dispositif de conduite (CEQ) détecte seul ledit évènement au moyen des capteurs (C1, C2, C3),
et où un évènement critique (EVN) situé en amont de la position géographique du véhicule (CAR) signifie que cet événement est localisé devant ledit véhicule, entre ledit véhicule et un point d'arrivé de l'itinéraire.

## Patentansprüche

1. Assistenzverfahren eines autonomen Kraftfahrzeugs, das die folgenden Schritte enthält:
- Verwendung eines autonomen Kraftfahrzeugs (CAR), das mit einer Vorrichtung zum selbsttätigen Fahren (CEQ) ausgestattet ist, die geeignet ist, über am Fahrzeug durchzuführende Lenkvorgänge zu bestimmen, um das Fahrzeug autonom auf einer Route fahren zu lassen,
- Verbindung der Vorrichtung zum selbsttätigen Fahren (CEQ) mit einem Computerserver (SERV) einer Fernsteuerzentrale (CENT), welche Verbindung über ein drahtloses Kommunikationsnetz (RES) hergestellt wird,
- Bestimmung der geographischen Position des Fahrzeugs (CAR) durch den Computerserver (SERV),
- prädiktive Erkennung eines kritischen Ereignisses EVN) auf der Route, welche Erkennung die Bedienung der Fahrvorrichtung (CEQ) durch einen Operator der Steuerzentrale (NET) nach sich zieht, so dass der Operator vorübergehend die Fernsteuerung des Fahrzeugs (CAR) übernimmt und über Lenkvorgänge bestimmt,
**dadurch gekennzeichnet, dass**:
- die prädiktive Erkennung des kritischen Ereignisses (EVN) aus der kombinierten Analyse von Daten durch den Computerserver (SERV) resultiert, wobei die Daten aufweisen:
-- Daten über den Zustand der auf der Route befahrenen Verkehrswege, der geographischen Position des Fahrzeugs (CAR) vorgelagert, und
-- Daten über die Verkehrsbedingungen auf der Route, der geographischen Position des Fahrzeugs (CAR) vorgelagert, und
-- Daten über die Witterungsverhältnisse auf der Route, der geographischen Position des Fahrzeugs (CAR) vorgelagert, und
-- von auf dem Fahrzeug (CAR) installierten Sensoren (C1, C2, C3) kommende Daten,
- die prädiktive Erkennung des kritischen Ereignisses (EVN) der geographischen Position des Fahrzeugs (CAR) vorgelagert durchgeführt wird, ehe die Fahrvorrichtung (CEQ) alleine das Ereignis mittels der Sensoren (C1, C2, C3) erkennt,
und wobei ein der geographischen Position des Fahrzeugs (CAR) vorgelagert befindliches kritisches Ereignis (EVN) bedeutet, dass dieses Ereignis sich vor dem Fahrzeug zwischen dem Fahrzeug und einem Endpunkt der Route befindet.

2. Verfahren nach Anspruch 1, das die folgenden Schritte aufweist:
- Zuordnung eines Risikoniveaus zu einem vom Computerserver (SERV) erkannten Ereignis, wobei das Risikoniveau berechnet wird, indem als Eingangsdaten genommen werden: die Daten über den Zustand der Verkehrswege, die Daten über die Verkehrsbedingungen, die Daten über die Witterungsverhältnisse, die von den Sensoren (C1, C2, C3) kommenden Daten,
- Bestimmung, das ein Ereignis kritisch ist, wenn das ihm zugeordnete Risikoniveau einen Schwellwert überschreitet.

3. Verfahren nach Anspruch 2, das die folgenden Schritte aufweist:
- Zuordnung eines Werts zu jedem der Eingangsdaten durch den Server (SERV),
- Gewichtung der den Eingangsdaten zugeordneten Werte, damit bestimmte der Daten ein höheres Gewicht haben als andere.

4. Verfahren nach Anspruch 3, wobei die von allen oder einem Teil der im Fahrzeug (CAR) installierten Sensoren (C1, C2, C3) kommenden Daten verwendet werden, um die Gewichtung der den anderen Daten zugeordneten Werte zu variieren.

5. Verfahren nach einem der vorhergehenden Ansprüche, wobei die Verbindung zwischen der Vorrichtung zum selbsttätigen Fahren (CEQ) und dem Computerserver (SERV) über ein Mobiltelefonnetz (RES) hergestellt wird.

6. Verfahren nach Anspruch 5, wobei das Mobiltelefonnetz (RES) ein 5G-Netz ist.

7. Verfahren nach einem der vorhergehenden Ansprüche, wobei die Daten über den Zustand der Verkehrswege vom Computerserver (SERV) abgerufen werden:
- von einer oder mehreren Datenbanken (BAS1) eines oder mehrerer Standorte digitaler Kartierung und Routenberechnung im Internet, und/oder
- von Sensoren, die in einem oder mehreren anderen autonomen Fahrzeugen installiert sind, die auf Verkehrswegen der Route fahren, der geographischen Position des Fahrzeugs (CAR) vorgelagert.

8. Verfahren nach einem der vorhergehenden Ansprüche, wobei die Daten über die Verkehrsbedingungen vom Computerserver (SERV) abgerufen werden:
- von einer oder mehreren Datenbanken (BAS1) eines oder mehrerer Standorte digitaler Kartierung und Routenberechnung im Internet, und/oder
- von Sensoren, die in einem oder mehreren anderen autonomen Fahrzeugen installiert sind, die auf Verkehrswegen der Route fahren, der geographischen Position des Fahrzeugs (CAR) vorgelagert.

9. Verfahren nach einem der vorhergehenden Ansprüche, wobei die Daten über die Witterungsverhältnisse vom Computerserver (SERV) abgerufen werden:
- von einer oder mehreren Datenbanken (BAS1) einer oder mehrerer Wetterstationen, und/oder
- von Wettersensoren, die auf anderen autonomen Fahrzeugen installiert sind, die auf Verkehrswegen der Route fahren, der geographischen Position des Fahrzeugs (CAR) vorgelagert.

10. Verfahren nach einem der vorhergehenden Ansprüche, wobei die vom Computerserver (SERV) analysierten Daten einen Abschnitt der Route betreffen, der sich der geographischen Position des Fahrzeugs (CAR) vorgelagert in einem Abstand gleich oder größer als 2 km von der geographischen Position befindet.

11. Assistenzsystem eines autonomen Kraftfahrzeugs, das aufweist:
- ein autonomes Kraftfahrzeug (CAR), das mit einer Vorrichtung zum selbsttätigen Fahren (CEQ) ausgestattet ist, die geeignet ist, über am Fahrzeug durchzuführende Lenkvorgänge zu bestimmen, um das Fahrzeug autonom auf einer Route fahren zu lassen,
- eine Fernsteuerzentrale (CENT), die einen Computerserver (SERV) aufweist, der mit der Vorrichtung zum selbsttätigen Fahren (CEQ) über ein drahtloses Kommunikationsnetz (RES) verbunden ist, wobei der Server eine Einrichtung enthält, um die geographische Position des Fahrzeugs (CAR) zu bestimmen,
und wobei:
- der Computerserver (SERV) geeignet ist, prädiktiv ein kritisches Ereignis (EVN) auf der Route zu erkennen, wobei die Erkennung zur Erzeugung einer Anweisung zum Bedienen der Fahrvorrichtung (CEQ) durch einen Operator (OP) der Steuerzentrale (CENT) führt, so dass der Operator vorübergehend die Fernsteuerung des Fahrzeugs (CAR) übernehmen und über Lenkvorgänge bestimmen kann,
**dadurch gekennzeichnet, dass**:
- die prädiktive Erkennung des kritischen Ereignisses aus der kombinierten Analyse von Daten durch den Computerserver (SERV) resultiert, wobei die Daten aufweisen:
-- Daten über den Zustand der auf der Route befahrenen Verkehrswege, der geographischen Position des Fahrzeugs (CAR) vorgelagert, und
-- Daten über die Verkehrsbedingungen auf der Route, der geographischen Position des Fahrzeugs (CAR) vorgelagert, und
-- Daten über die Witterungsverhältnisse auf der Route, der geographischen Position des Fahrzeugs (CAR) vorgelagert, und
-- von auf dem Fahrzeug (CAR) installierten Sensoren (C1, C2, C3) kommende Daten,
- der Computerserver (SERV) geeignet ist, die prädiktive Erkennung des der geographischen Position des Fahrzeugs (CAR) vorgelagerten kritischen Ereignisses (EVN) durchzuführen, ehe die Fahrvorrichtung (CEQ) alleine das Ereignis mittels der Sensoren (C1, C2, C3) erkennt,
und wobei ein der geographischen Position des Fahrzeugs (CAR) vorgelagert befindliches kritische Ereignis (EVN) bedeutet, dass dieses Ereignis sich vor dem Fahrzeug zwischen dem Fahrzeug und einem Endpunkt der Route befindet.

## Claims

1. Method for assisting an autonomous motor vehicle, comprising the following steps:
- using an autonomous motor vehicle (CAR) equipped with an automatic driving device (CEQ) suitable for deciding on handling actions to be performed on said vehicle in order to autonomously drive said vehicle on a route,
- connecting the automatic driving device (CEQ) to a computer server (SERV) of a remote command centre (CENT), which connection is made through a wireless communication network (RES),
- determining, by way of the computer server (SERV), the geographical position of the vehicle (CAR),
- predictively detecting a critical event (EVN) on the route, which detection leads to the driving device (CEQ) being taken over by an operator at the command centre (NET) so that said operator temporarily takes control of the vehicle (CAR) remotely and decides on handling actions,
**characterized in that**:
- the predictive detection of the critical event (EVN) results from the combined analysis of data by the computer server (SERV), which data include:
-- data about the state of the traffic lanes used on the route upstream of the geographical position of the vehicle (CAR), and
-- data about traffic conditions on the route upstream of the geographical position of the vehicle (CAR), and
-- data about weather conditions on the route upstream of the geographical position of the vehicle (CAR), and
-- data from sensors (C1, C2, C3) installed on the vehicle (CAR),
- the predictive detection of the critical event (EVN) is performed upstream of the geographical position of the vehicle (CAR), before the driving device (CEQ) detects said event on its own by means of the sensors (C1, C2, C3),
and where a critical event (EVN) situated upstream of the geographical position of the vehicle (CAR) means that this event is located in front of said vehicle, between said vehicle and a point of arrival on the route.

2. Method according to Claim 1, comprising the following steps:
- assigning a level of risk to an event detected by the computer server (SERV), the level of risk being calculated by taking the following as input data: the data about the state of the traffic lanes, the data about traffic conditions, the data about weather conditions, the data from the sensors (C1, C2, C3),
- determining that an event is critical if the level of risk assigned thereto exceeds a threshold level.

3. Method according to Claim 2, comprising the following steps:
- assigning, by way of the server (SERV), a value to each of the input data,
- weighting the values assigned to the input data so that some of said data have a greater weight than others.

4. Method according to Claim 3, wherein the data from all or some of the sensors (C1, C2, C3) installed on the vehicle (CAR) are used to change the weighting of the values assigned to the other data.

5. Method according to one of the preceding claims, wherein the connection between the automatic driving device (CEQ) and the computer server (SERV) is made through a mobile phone network (RES).

6. Method according to Claim 5, wherein the mobile phone network (RES) is a 5G network.

7. Method according to one of the preceding claims, wherein the data about the state of the traffic lanes are retrieved by the computer server (SERV):
- from one or more databases (BAS1) of one or more digital mapping and route calculation websites, and/or
- from sensors installed on one or more other autonomous vehicles travelling in traffic lanes on the route upstream of the geographical position of the vehicle (CAR).

8. Method according to one of the preceding claims, wherein the data about traffic conditions are retrieved by the computer server (SERV):
- from one or more databases (BAS1) of one or more digital mapping and route calculation websites, and/or
- from sensors installed on one or more other autonomous vehicles travelling in traffic lanes on the route upstream of the geographical position of the vehicle (CAR).

9. Method according to one of the preceding claims, wherein the data about weather conditions are retrieved by the computer server (SERV):
- from one or more databases (BAS1) of one or more weather sites, and/or
- from weather sensors installed on other autonomous vehicles travelling in traffic lanes on the route upstream of the geographical position of the vehicle (CAR).

10. Method according to one of the preceding claims, wherein the data analysed by the computer server (SERV) relate to a portion of the route that is situated upstream of the geographical position of the vehicle (CAR), at a distance equal to or greater than 2 km from said geographical position.

11. System for assisting an autonomous motor vehicle, comprising:
- an autonomous motor vehicle (CAR) equipped with an automatic driving device (CEQ) suitable for deciding on handling actions to be performed on said vehicle in order to autonomously drive said vehicle on a route,
- a remote command centre (CENT) comprising a computer server (SERV) connected to the automatic driving device (CEQ) through a wireless communication network (RES), which server comprises a means for determining the geographical position of the vehicle (CAR),
and wherein:
- the computer server (SERV) is suitable for predictively detecting a critical event (EVN) on the route, which detection leads to the generation of an instruction for the driving device (CEQ) to be taken over by an operator (OP) at the command centre (CENT) so that said operator can temporarily take control of the vehicle (CAR) remotely and decide on handling actions,
**characterized in that**:
- the predictive detection of the critical event results from the combined analysis of data by the computer server (SERV), which data include:
-- data about the state of the traffic lanes used on the route upstream of the geographical position of the vehicle (CAR), and
-- data about traffic conditions on the route upstream of the geographical position of the vehicle (CAR), and
-- data about weather conditions on the route upstream of the geographical position of the vehicle (CAR), and
-- data from sensors (C1, C2, C3) installed on the vehicle (CAR),
- the computer server (SERV) is suitable for performing the predictive detection of the critical event (EVN) upstream of the geographical position of the vehicle (CAR), before the driving device (CEQ) detects said event on its own by means of the sensors (C1, C2, C3),
and where a critical event (EVN) situated upstream of the geographical position of the vehicle (CAR) means that this event is located in front of said vehicle, between said vehicle and a point of arrival on the route.
